Europäisches Patentamt

European Patent Office

Office européen des brevets

(11) Publication number: **0 516 911 A1**

# EUROPEAN PATENT APPLICATION

(21) Application number: **91500056.6**

(22) Date of filing: **06.06.91**

(51) Int. Cl.5: **B26F 1/38**, B26D 7/08, F16F 15/26

(43) Date of publication of application:
**09.12.92 Bulletin 92/50**

(84) Designated Contracting States:
**AT BE CH DE DK ES FR GB IT LI LU NL SE**

(71) Applicant: **INVESTRONICA S.A.**
**Tomás Breton, 62**
**E-28045 Madrid-7(ES)**

(72) Inventor: **Armisen, P.**
**C/Playa de Samil No.42**
**Madrid(ES)**
Inventor: **Ram n Pérez, J.**
**C/Avda. del Mediterraneo, 43**
**Madrid(ES)**
Inventor: **Alcántara Pérez, Bernardo**
**C/Rioja No.13**
**Madrid(ES)**

(74) Representative: **Puschmann, Heinz H.**
**Rieder & Partner Patentanwälte Postfach 10**
**12 31**
**W-8000 München 1(DE)**

(54) **Improved mechanism to drive a blade or knife of a cutting apparatus in cutting machines.**

(57) Driving mechanism for a cutting apparatus for an automatically controlled cutting machine having a reciprocating blade or knife (106) driven by a crank machanism, the improvement comprising means for dynamically balancing the previous mechanism, including a first main gear (22) driven by a first shaft, two equally spaced gears (24,26) related to said first shaft in direction perpendicular to the rectilinear motion of the blade, first (24) of said two gears directly geared to said first main gear (22) and the second (26) by means of an idler intermediate gear (28) making the two equally spaced gears (24,26) move in opposite direction, weight means (30,32) to locate at convenient position on the two equally spaced gears to counterbalance the force due to the reciprocating blade mechanism.

EP 0 516 911 A1

Fig. 5

## BACKGROUND

This invention relates to a drive mechnism used to drive a blade or knife of a cutting apparatus in cutting machines.

More particularly, the invention relates to drive mechanisms for converting the rotary motion of a drive member of a cutting apparatus for a cutting machine in the reciprocating motion of a knife and it is an object of the invention to disclose a cutting apparatus with an improved balanced drive mechanism for converting the rotary motion of the drive in the reciprocating motion for the knife.

Known drive mechanisms adapted to drive cutting tools of cutting apparatus for cutting lay-ups of sheet materials in an automatic way comprise in general a rotating fly wheel having an excentric drive pin which is linked to a horizontal guided slide member of the knife whereby for balancing the rotary motion of the fly wheel a counter mass is attached to the fly wheel, see DE 37 15 229 A1.

To minimize dynamic forces at the relative high speed used to drive the knife in order to reach the necessary cutting velocity of the knife a further way is to design the cranks and connecting roots as light as possible, otherwise relative high dynamic forces are generated which, if not compensated, give rise to strong vibrations that damage the machine especially because of the necessary lightness in and of the moving parts of the machine; see US 3.747.454. On the other hand to withstand the imposed lateral forces on the connection between the connecting rod and the knife relative sturdy structures have to be used.

Due to the mentioned high speed demand in such drive mechanisms the inertial forces and the changes of the angular accelerations are high. The known balancing means work insufficiently with respect to vibrations and to uniform anular motion of the drive mechanism as well as of the crank shaft drive. The results are poorly wearing properties, heavy weight construction of the cutting apparatus and inconstancy of the cutting velocity and therefore discontinuity in the motions between knife and the material to be cut.

## SUMMARY OF THE INVENTION

It is an aim of the invention to alleviate the aforementioned problems and accordingly there is provided a driving mechanism for a cutting apparatus having a reciprocating blade driven by a crank mechanism, the improvement comprising means for dynamically balancing the previous mechanism, said crank including a first shaft and an excentric actuating shaft, a first main gear driven by said first shaft, two equally spaced gears related to said first shaft in direction perpendicular to the rectilinear motion of the blade, first of said two gears directly geared to said first main gear and the second by means of an idler intermediate gear making the two equally spaced gears move in opposite direction, weight means to locate at convenient position on the two equally spaced gears to counterbalance the force due to the reciprocating blade mechanism.

In general, the present invention describes an improved balanced mechanism to drive a blade or knife in a cutting apparatus of cutting machines consisting of moving two substantially equal masses mounted to two rotating parts respectively placed equidistant respective to the knife motion line passing by the excentric actuating shaft.

An embodiment of the invention will now be described by way of example with reference to the drawing in which

Fig. 1     is a general diagrammatic perspective view of the machine in which is used the present invention;

Fig. 2     is a lateral schematic view of the knife actuating mechanism of a cutting apparatus used in a machine according to Fig. 1;

Fig. 3     is a detailed front view of the balancing mechanism of the cutting apparatus according to Fig. 2;

Fig. 4     is a detailed cross section along 4-4 in Fig. 3 and

Fig. 5     is a schematic representation of the mechanism according to Fig. 3.

## DETAILED DESCRIPTION OF THE PREFERRED EMBODIMENT

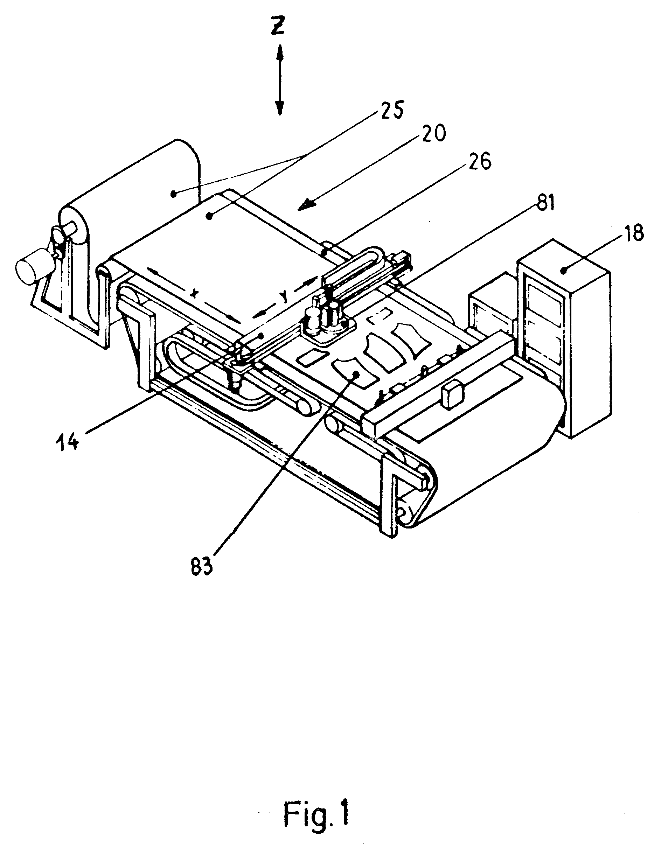

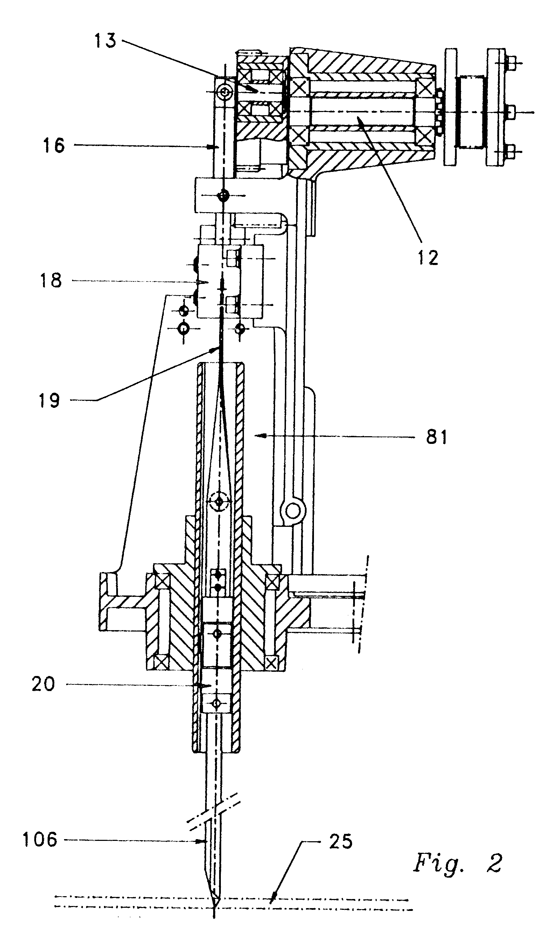

Referring now to the drawings, the present invention is illustrated with reference to an automatically controlled cutting machine 20 shown schematically in Fig. 1, in which one or more sheets of material 24 to be cut is fed from a suitable supply means at one end of a cutting table and is passed over a cutting surface 26. Over the surface of said cutting table pieces are cut by a cutting tool included in a cutting apparatus or head 81 mounted to a Y-carriage which is movable mounted on a X-carriage of a carriage assembly 14. The cutting tool is a reciprocating blade or knife 106 - see Fig. 2 - which follows a cutting path 83 by a combined movement of the cutting blade around an axis Z perpendicular to the cutting surface 26 and a combined motion of the X- and Y- assembly 14 such that the cutting edge of the blade remains tangently to said cutting path 83. During said movement the blade is reciprocating along said Z-axis for cutting said sheets of material 24. Movement of the blade and of the X-Y-carriage assembly is controlled by a controller 18.

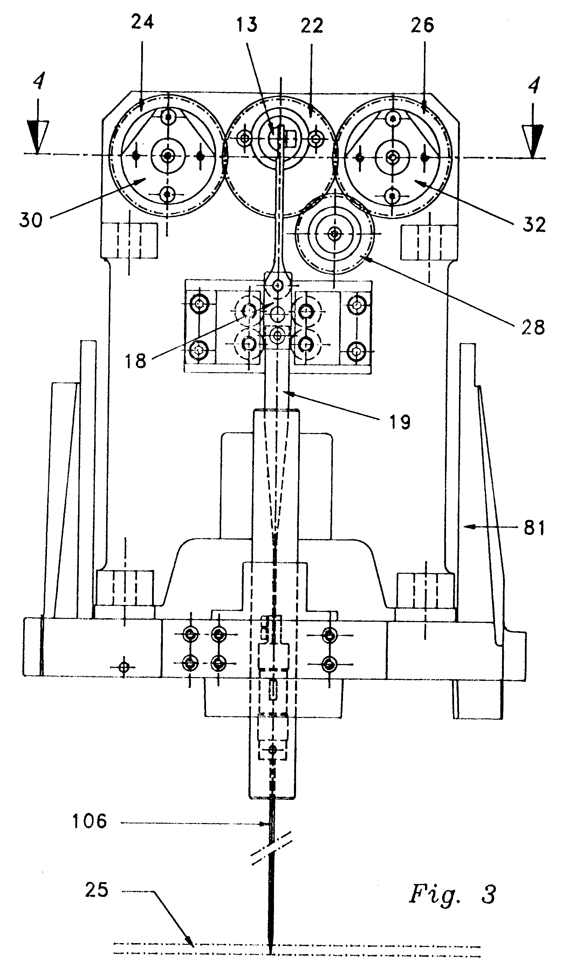

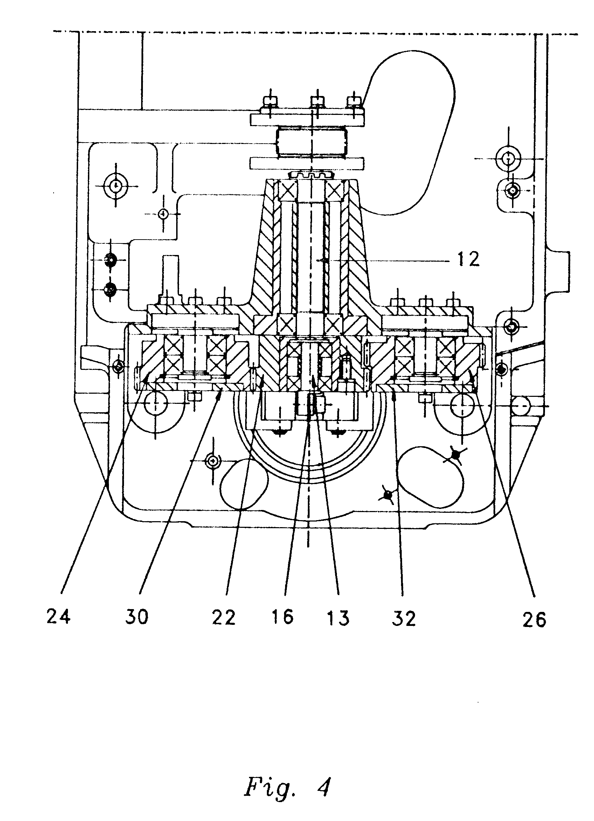

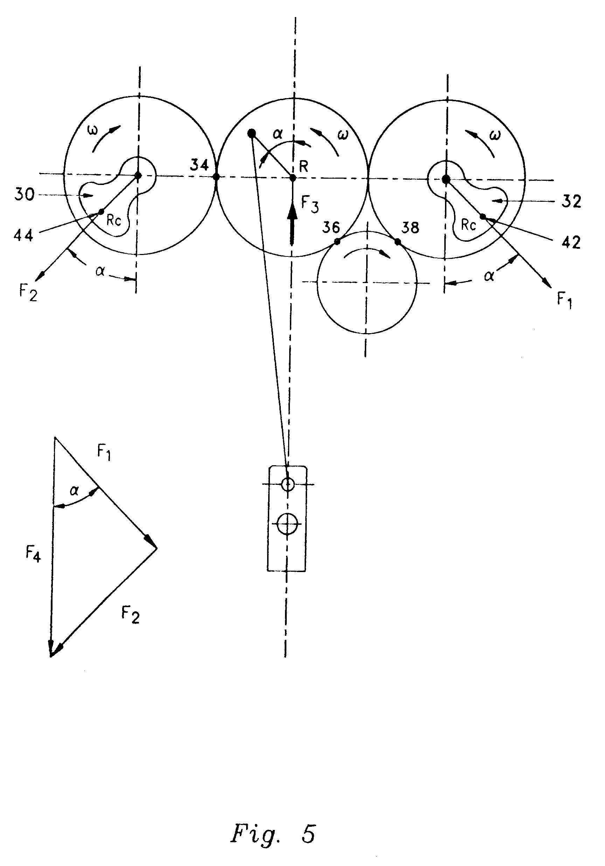

The blade 106 - as shown in Figures 2 and 3 - is reciprocated by driving means comprising a shaft 12 with excentric pin 13, a connecting rod or cross arm 16 linked to a sliding guide 18, connecting link 19 and swiveling part 20, to which the blade 106 is connected. An externally toothed fly wheel 22 is positioned at one end of shaft 12; equally spaced and at both sides of shaft 12 there are two gears 24 and 26 of the same pitch diameter as that of the toothed fly wheel 22, whereby gear 24 is directly geared to gear 22, whereas gear 26 is geared to an idler intermediate gear 28 that receives the motion from gear 22 - see Figures 3 and 4; in said driving means connected in the previously explained way gears 24 and 26 move in opposite directions. To each of said gears 24 and 26 a balancing mass 30 and 32 is connected respectively both of the same value to balance motions and angular forces of said driving means in such a way that the value and relative position of them in the mechanism follows the explanation in Fig. 5.

The schematic diagram of said balanced drive mechanism as shown in Fig. 5 is in one position represented by the angle $\alpha$ of the crank; points 34, 36 and 38 are points where different gears are meshing, whereas gears 22 and 26 are not in direct mesh, even contacting tangentially their respective pitch circle as can be seen in Fig. 4. The balancing masses 30 and 32 are also represented schematically in Fig. 5 with their position defined by the angle $\alpha$ of the radius passing by their respective centre of gravity 42, 44; masses 30 and 32 have both the same value, as previously mentioned and their center of gravity must be at the same distance from the point about which they rotate.

The unbalanced first order inertia force has the direction represented by F3 and has the value F3

$$F_3 = m\ Rw^2 \cos \alpha \qquad (1)$$

being "m" the unbalanced mass of the mechanism, "R" the excentric radius and "w" the excentric angular speed.

The centrifugal forces of the masses are also shown in Fig. 5; they are represented by F1 and F2 due to rotation of the balancing masses 30 and 32.

For balancing said drive mechanism F1 must be equal to F2 and with the value

$$F1 = F2 = mc\ Rc\ w^2 \qquad (2)$$

being "mc" the mass of the balancing masses and "Rc" their gyration radius. Also shown in Fig. 5 is F4 the addition vector of F1 and F4 opposed to F3 so

$$F4 = 2\ mc\ Rc\ w^2 \cos \alpha \qquad (3)$$

and this force counterbalances exactly the previously mentioned first order if

$$mc = \frac{mR}{2Rc} \qquad (4)$$

which can be released mechanically very easily by proper positioning and dimensioning said masses 30 and 32.

The drive mechanism described before can be implemented also with friction wheels instead of gears.

## Claims

1. A cutting apparatus (81) for cutting sheet material (24) said cutting apparatus comrising: a drive pin (13) movable in a circular path about a given crank axis (12), a cross arm (16) supported at one of its ends for pivotal movement about a cross arm pivot axis fixed relatively to and parallel to said crank axis, a connecting link (19) connected between said drive pin and the other end of said cross arm for oscillating said cross arm about said cross arm pivot axis in response to travel of said drive pin repeatedly about said circular path, a knife (106) supported for movement along a knife axis (18) fixed relatively to said crank and pivot axes and located in a plane perpendicular to said crank and cross arm pivot axes and having a driven first main gear (22) interconnected with two equally spaced gears (24, 26) related to said first main gear in direction perpendicular to the rectilinear motion of said knife (106), the first (24) of said two gears directly geared to said first main gear (22), whereas the second of said gears (26) is geared by means of an idler intermediate gear (28) driving said two gears equally spaced in opposite directions with equal motions, and weight means (30, 32) located at convenient positions on said two equally spaced gears (24, 26), to counterbalance all dynamic forces due to said reciprocating knife mechanism.

2. Cutting apparatus as defined in claim 1 further characterized by gears (22, 24, 26) and idler intermediate gear (28) being in frictional drive connection.

3. Cutting apparatus as defined in claim 1 further characterized by gears (22, 24, 26) and idler intermediate gear (28) being in tooth drive connection.

4. Cutting apparatus as defined in claims 1 to 3 further characterized by counterbalance weights (30, 32) on said two gears (24, 26) being of the same value and defined by angel $\alpha$ of the radius passing by their respective centre of gravity and having the same distance from said pivot axis (12).

Fig.1

Fig. 2

Fig. 3

*Fig. 4*

*Fig. 5*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-2 595 464 (A. KAUFMANN) <br> * column 3, line 7 - line 46; figures 1,2 * | 1,3 | B26F1/38 <br> B26D7/08 <br> F16F15/26 |
| Y |  | 4 |  |
| Y | PATENT ABSTRACTS OF JAPAN <br> vol. 3, no. 97 (M-69)17 August 1979 <br> & JP-A-54 072 304 ( DAIHATSU KOGYO K.K. ) 6 July 1979 <br> * abstract * | 4 |  |
| A | EP-A-0 234 846 (TRIUMPH MOTORCYCLES) <br> * abstract; figure 1 * | 1,3 |  |
| A | GB-A-2 168 642 (G O STUMPF GMBH) <br> * abstract; figure 3 * | 1 |  |

TECHNICAL FIELDS SEARCHED (Int. Cl.5 )

B26F
B26D
A41H
F16F

The present search report has been drawn up for all claims

| Place of search | Date of completion of the search | Examiner |
|---|---|---|
| THE HAGUE | 06 FEBRUARY 1992 | GARELLA M.G.C.D. |

EPO FORM 1503 03.82 (P0401)